(19) Europäisches Patentamt
European Patent Office
Office européen des brevets

(11) **EP 4 239 523 A1**

(12) **EUROPEAN PATENT APPLICATION**

(43) Date of publication:
**06.09.2023 Bulletin 2023/36**

(21) Application number: **22166733.0**

(22) Date of filing: **05.04.2022**

(51) International Patent Classification (IPC):
***G06N 3/04*** (2023.01) ***G06N 3/08*** (2023.01)

(52) Cooperative Patent Classification (CPC):
**G06N 3/08; G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2022 US 202217686267**

(71) Applicant: **NavInfo Europe B.V.**
**5657 DB Eindhoven (NL)**

(72) Inventors:
• **GOWDA, Shruthi**
**Eindhoven (NL)**

• **ZONOOZ, Bahram**
**Eindhoven (NL)**
• **ARANI, Elahe**
**Eindhoven (NL)**

(74) Representative: **van Breda, Jacobus**
**Octrooibureau Los & Stigter B.V.**
**P.O. Box 20052**
**1000 HB Amsterdam (NL)**

Remarks:
Amended claims in accordance with Rule 137(2) EPC.

(54) **METHOD TO ADD INDUCTIVE BIAS INTO DEEP NEURAL NETWORKS TO MAKE THEM MORE SHAPE-AWARE**

(57) A computer implemented method to distill an inductive bias in a deep neural network operating on image data, said deep neural network comprising a first, standard, network that receives original images from the image data, and a second, inductive-bias, network that receives shape data of the images, wherein a bias alignment is performed on the standard network and inductive-bias network in feature space and decision space to enable the networks to learn both local texture information and global shape information to produce high-level, generic representations.

FIG. 2

**Description**

The invention relates to a computer implemented method of collaboratively training two deep neural networks using image data.

Deep Neural Networks (DNNs) are evolving continuously and are being deployed in many real world applications. The networks encode information from the data in the form of feature representations that help in improving generalization to different distributions and tasks. Hence, the encoded representations need to be robust and encompass high-level abstractions of the data, instead of trivial local cues to be able to generalize well.

An important goal in deep learning (DL) is to learn versatile, high-level feature representations of the input as these features encompasses all the information that translates to better generalization and robustness performances. Shortcut learning is a challenging problem prevalent in Deep Learning. Shortcuts are defined as decision rules that perform well on the current data but that do not transfer to a data from different distribution. Networks are shown to rely on the spurious correlations or statistical irregularities in the dataset, thus falling to the shortcut learning trap.

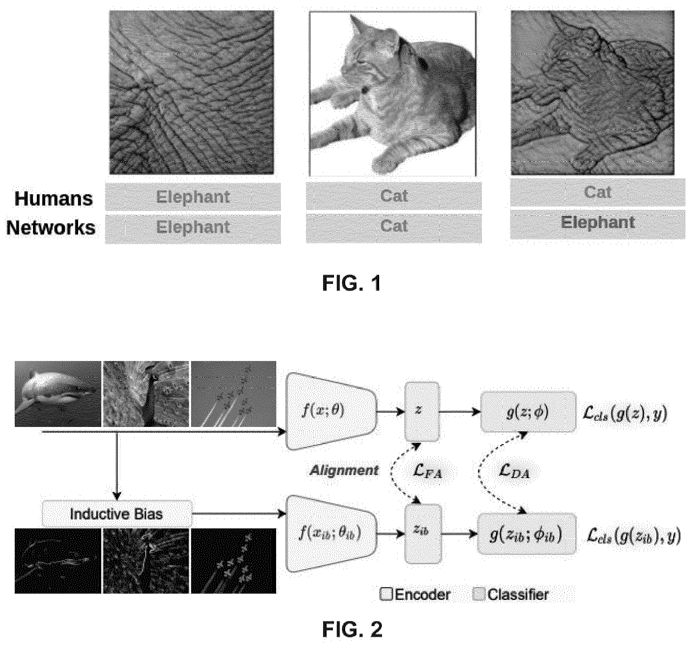

Also, networks have shown the tendency to rely more on texture information present in the data, instead of global semantics. Psychophysical experiments have shown that networks make decisions based on texture while humans focus more on global shape information. For example, in the figure 1, a cat with an elephant texture is still a cat for humans but the network makes a wrong prediction.

Learning unintended solutions and just local trivial attributes in the datasets is a prevalent shortcoming that reduces the network's capability in performing effectively and reliably in changing environments found in real world applications. In contrast humans exhibit relatively lesser shortcut learning trait owing to the inductive bias in the brain.

Different approaches have been proposed in the literature to tackle the above problem, which solutions can be classified as augmentation-biased, debiasing-based, and ensemble-based.

The following literature relates to the augmentation-biased solutions.

- Robert Geirhos[1] introduced a dataset, Stylized-ImageNet, by transferring styles of artistic paintings onto the ImageNet data using adaptive instance normalization (AdaIN).
- Yingwei Li[2] also created an augmented dataset using style transfer but the style image is chosen from the training data itself. The texture and shape information of two randomly chosen images are blended to create new training samples and mixup is used to create new labels.
- Kaiyang Zhou[3] also uses AdaIN to mix styles of images present in the training set to create novel domains to improve domain generalization.
- dXi Chen[4] generates training samples with disentangled features to synthesize de-biased samples.

All these works need to create new data to augment the training setup. They train a single network with both these data which are of different distributions, and hence learning both together will lead to sub-optimal representations.

The following literature relates to the Debiasing-based solutions.

- Byungju Kim[5] trains two models, one to predict the label and the other to predict the bias, in an adversarial training process. A regularization loss is formulated based on mutual information between the features and the bias. These works have a requirement of knowing the type of bias existing in the data in advance in order to de-bias the network.

The following literature relates to the Ensemble-based solutions.

- Mancini[6] built an ensemble of multiple domain-specific classifiers, each attributing to a different cue.
- Jain[7] trained multiple networks separately, each with a different kind of bias. The ensemble of these biased-networks was used to produce pseudo labels for unlabeled data.

These works require an ensemble of networks during inference instead of just one, which can cause issues in deployment.

The following patent literature constitutes distant background technology. The reference to these patents cannot be regarded as an acknowledgment of their relevance. The documents are merely cited to show the prior art status of development, which is distant from the invention.

CN108229501 discloses a sequential sketch identification method fusing texture features and shape features. The method comprises the steps of firstly, according to a stroke sequence of a sketch, obtaining an image sequence; secondly, extracting the texture features and the shape features of images to form a feature sequence corresponding to the image sequence; and thirdly, inputting the features to a network containing two stages for performing learning, wherein in the first stage, two recurrent neural networks receive the texture features and the shape features of the images; and in the second stage, outputs in the previous stage are fused firstly, then a fused output is input to a third recurrent neural network, and finally a result is obtained through a classifier, so that iterative learning is performed according to the sequence in the sequences.

CN110705440 discloses a capsule endoscopy image recognition model based on neural network feature fusion.

The disclosed method comprises: firstly, performing G channel separation, Log transformation and histogram equalization preprocessing on an image, to highlight the color, the shape and the texture information; respectively extracting features of the three preprocessed images by adopting three same convolutional neural networks; and finally, performing feature fusion and recognition by adopting a neural network.

US2020/0074305 discloses a computer implemented method and corresponding systems and computer readable media for improving performance of a deep neural network to mitigate effects related to catastrophic forgetting in neural network learning. In an embodiment, the method includes storing, in memory, logits of a set of samples from a previous set of tasks; and maintaining classification information from the previous set of tasks by utilizing the logits for matching during training on a new set of tasks.

US2008/0240514 discloses a method and system for a multimodal biometric system utilizing a single image to generate hand shape and palmprint features. The method utilizes a digital camera, and incorporates feature subset selection algorithms to eliminate redundant data. Through the use of a feature algorithm the hand shape features and palmprint features are fused.

The invention has the following objectives:

- To overcome the shortcoming of neural networks to learn trivial solutions and spurious correlations in the data
- To enable networks to learn generic feature representations
- To improve generalization and robustness in both in-distribution and out-of-distribution data (for real world applications)
- To distill the cognitive bias present in humans to the networks.

According to the invention a computer implemented method is proposed to distill an inductive bias in a deep neural network operating on image data, said deep neural network comprising a first, standard, network that receives original images from the image data, and a second, inductive-bias, network that receives shape data of the images, wherein a bias alignment is performed on the standard network and inductive-bias network in feature space and decision space to enable the networks to learn both local texture information and global shape information to produce high-level, generic representations.

Preferably the networks are collaboratively trained with a supervised classification loss and an alignment loss.

Further it is preferred that the networks are induced to learn both local and global semantics by injecting inductive bias into the standard network to encourage it to learn relatively more global semantics so as to improve generalization and robustness. Adding the inductive bias into neural networks can indeed help enhance the generalization, robustness and transfer learning capabilities of the networks.

Advantageously shape attributes are promoted and/or texture information are suppressed so as to induce the networks to learn relatively more semantic information.

Suitably the shape information is derived from the image data using an edge detection algorithm. Particularly it is preferred to apply a Sobel edge detection algorithm.

Preferably the bias alignment applies a bias alignment objective to provide flexibility for each of the standard network and the inductive-bias network to learn on its own input and also align with the other network.

Suitably the bias alignment occurs in two stages, a first stage of decision alignment in a final prediction space, and a second stage of feature alignment in a latent space.

Preferably the decision alignment is performed in a prediction space employing as an objective for the decision alignment the known Kullback-Leibler divergence.

Further advantageously the feature alignment is performed in a latent space employing as an objective for the feature alignment the Mean Square Error.

The invention will hereinafter be further elucidated with reference to the drawing of an exemplary embodiment of the computer implemented method according to the invention that is not limiting as to the appended claims.

In the drawing:

- figure 1 illustrates a problem of the prior art method resulting in an erroneous attribution to particular images; and
- figure 2 shows a schematic of an inductive bias distillation framework representing the computer implemented method of the invention.

Figure 1 has been discussed above and illustrates the problem of the prior art that the invention seeks to solve.

With reference to figure 2 it is shown that the computer implemented method of the invention has two networks: a standard-network receiving original image data and an inductive-bias network receiving the shape data. In the invention a bias-alignment objective is employed that provides flexibility for both the standard network and the inductive-bias network to learn on its own input but also align with the other network receiving the original image data. The alignment is performed in two different stages : decision-alignment in a final prediction space and feature-alignment in a latent space. The bias-alignment helps in reducing the reliance on local texture cues and instead also focuses on the global shape semantics to produce high-level encodings.

To execute the method of the invention input samples x and labels y are sampled from a dataset D. The samples x are sent to an Inductive-bias algorithm (Sobel) to extract the shape data, $x_{ib}$. x is the input to the standard-network and $x_{ib}$ is the input to the inductive-bias network. The features from the encoder $z = f(x)$ and $z_{ib} = f(x_{ib})$ are sent to respective classifiers g of the two networks. To distill the inductive-bias knowledge and make the inductive-bias network more shape-aware, bias alignment is executed at two levels: prediction space and the latent space. The decision alignment (DA) is performed in the prediction space. The invention preferably employs the Kullback-Leibler divergence as the objective for the DA. The decision alignment helps incentivize the supervision from shape data, thus allowing to make decisions that are not susceptible to shortcut cues.

The Feature alignment (FA) is performed to align the features in the latent space to produce more optimal representations. The invention employs the Mean Square Error as the objective for the FA. The feature alignment forces the network to learn representations invariant to color/texture or other trivial solutions and hence be more generic.

1. Classification Loss

$$\mathcal{L}_{cls} \triangleq \mathop{\mathbb{E}}_{(x,y)\sim D}\left[L_{CE}(y, g(z))\right]$$

2. Decision Alignment Loss

$$\mathcal{L}_{DA} = \mathcal{D}_{KL}(\sigma(g(z))\|\sigma(g(z_{ib})))$$

3. Feature Alignment Loss

$$\mathcal{L}_{FA} = \mathop{\mathbb{E}}_{z\sim f(x),z_{ib}\sim f(x_{ib})}\left\|z - z_{ib}\right\|_2^2$$

The overall loss function per network is the sum of the classification loss and the bias alignment

loss ($p = \sigma(g(z))$ and $p_{ib} = \sigma(g(z_{ib}))$ )

$$\mathcal{L} = \mathcal{L}_{cls} + \lambda\mathcal{L}_{DA}(p, p_{ib}) + \gamma\mathcal{L}_{FA}(z, z_{ib})$$

$$\mathcal{L}_{ib} = \mathcal{L}_{cls} + \lambda\mathcal{L}_{DA}(p_{ib}, p) + \gamma\mathcal{L}_{FA}(z_{ib}, z)$$

Embodiments of the present invention can include every combination of features that are disclosed herein independently from each other. Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References

1. Robert Geirhos, Patricia Rubisch, Claudio Michaelis, Matthias Bethge, Felix A. Wichmann, and Wieland Brendel. Imagenet-trained cnns are biased towards texture; increasing shape bias improves accuracy and robustness, 2019
2. Yingwei Li, Qihang Yu, Mingxing Tan, Jieru Mei, Peng Tang, Wei Shen, Alan Yuille, and Cihang Xie. Shapetexture debiased neural network training. arXiv preprint arXiv:2010.05981, 2020
3. Kaiyang Zhou, Yongxin Yang, Yu Qiao, and Tao Xiang. Domain generalization with mixstyle. arXiv preprint arXiv:2104.02008, 2021
4. Xi Chen, Yan Duan, Rein Houthooft, John Schulman, Ilya Sutskever, and Pieter Abbeel. Infogan: Interpretable representation learning by information maximizing generative adversarial nets. In Proceedings of the 30th International Conference on Neural Information Processing Systems, pp. 2180-2188, 2016
5. Byungju Kim, Hyunwoo Kim, Kyungsu Kim, Sungjin Kim, and Junmo Kim. Learning not to learn: Training deep neural networks with biased data. In Proceedings of the IEEE/CVF Conference on Computer Vision and Pattern Recognition, pp. 9012-9020, 2019.
6. Massimiliano Mancini, Samuel Rota Bulo, Barbara Caputo, and Elisa Ricci. Best sources forward: domain generalization through source-specific nets. In 2018 25th IEEE international conference on image processing (ICIP), pp.353-1357. IEEE, 2018
7. Saachi Jain, Dimitris Tsipras, and Aleksander Madry. Combining diverse feature priors. arXiv preprint arXiv:2110.08220, 2021

**Claims**

1. A computer implemented method to distill an inductive bias in a deep neural network operating on image data, said deep neural network comprising a first, standard, network that receives original images from the image data, and a second, inductive-bias, network that receives shape data of the images, wherein a bias alignment is performed on the standard network and inductive-bias network in feature space and decision space to enable the networks to learn both local texture information and global shape information to produce high-level, generic representations.

2. The computer implemented method of claim 1, wherein the networks are collaboratively trained with a supervised classification loss and an alignment loss.

3. The computer implemented method of claim 1 or 2, wherein the networks are induced to learn both local and global semantics by injecting inductive bias into the standard network to encourage it to learn relatively more global semantics so as to improve generalization and robustness.

4. The computer implemented method of any one of claims 1 - 3, wherein shape attributes already existing in the image data are promoted and/or texture information are suppressed so as to induce the networks to learn relatively more semantic information.

5. The computer implemented method of any one of claims 1 - 4, wherein shape information is derived from the image data using an edge detection algorithm, preferably a Sobel edge detection algorithm.

6. The computer implemented method of any one of claims 1 - 5, wherein in the bias alignment a bias alignment objective is applied to provide flexibility for each of the networks to learn on its own input but also align with the other network.

7. The computer implemented method of claim 6, wherein bias alignment occurs in two stages, a first stage of decision alignment in a final prediction space, and a second stage of feature alignment in a latent space.

8. The computer implemented method of claim 7, wherein the decision alignment is performed in a prediction space employing as an objective for the decision alignment the known Kullback-Leibler divergence.

9. The computer implemented method of claim 7 or 8, wherein the feature alignment is performed in a latent space employing as an objective for the feature alignment the Mean Square Error.

10. Computer program comprising instructions that when loaded in executable format in a computer causes the computer to execute the computer implemented method of any one of claims 1 - 9.

11. Data carrier provided with the computer program of claim 10.

12. Computer or computer system provided with the computer program of claim 10.


**Amended claims in accordance with Rule 137(2) EPC.**

1. A computer implemented method to distill an inductive bias in a deep neural network operating on image data, said deep neural network comprising a first, standard, network that receives original images from the image data, and a second, inductive-bias, network that receives shape data of the images, wherein the shape information is derived from the image data using an edge detection algorithm, and wherein a bias alignment is performed on the standard network and inductive-bias network in feature space and decision space to enable the networks to learn both local texture information and global shape information to produce high-level, generic representations, wherein the networks are collaboratively trained with a supervised classification loss and an alignment loss, wherein the bias alignment occurs in two stages, a first stage of decision alignment in a final prediction space, and a second stage of feature alignment in a latent space.

2. The computer implemented method of claim 1 ,
wherein the networks are induced to learn both local and global semantics by injecting inductive bias into the standard network to encourage it to learn relatively more global semantics so as to improve generalization and robustness.

3. The computer implemented method of any one of claims 1 - 2, wherein shape attributes already existing in the image data are promoted and/or texture information are suppressed so as to induce the networks to learn relatively more semantic information.

4. The computer implemented method of any one of claims 1 - 3, wherein the edge detection algorithm is a Sobel edge detection algorithm.

5. The computer implemented method of any one of claims 1 - 4, wherein in the bias alignment a bias alignment objective is applied to provide flexibility for each of the networks to learn on its own input but also align with the other network.

6. The computer implemented method of any one of claims 1 - 5, wherein the decision alignment is performed in a prediction space employing as an objective for the decision alignment the known Kullback-Leibler divergence.

7. The computer implemented method of any one of claims 1 - 6, wherein the feature alignment is performed in a latent space employing as an objective for the feature alignment the Mean Square Error.

8. Computer program comprising instructions that when loaded in executable format in a computer causes the computer to execute the computer implemented method of any one of claims 1 - 7.

9. Data carrier provided with the computer program of claim 8.

10. Computer or computer system provided with the computer program of claim 8.

**FIG. 1**

**FIG. 2**

Europäisches
Patentamt
European
Patent Office
Office européen
des brevets

# EUROPEAN SEARCH REPORT

Application Number

EP 22 16 6733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU YE ET AL: "SEINet: Semantic-Edge Interaction Network for Image Manipulation Localization", 22 October 2021 (2021-10-22), PATTERN RECOGNITION : 5TH ASIAN CONFERENCE, ACPR 2019, AUCKLAND, NEW ZEALAND, NOVEMBER 26-29, 2019, REVISED SELECTED PAPERS, PART II; [LECTURE NOTES IN COMPUTER SCIENCE], SPRINGER INTERNATIONAL PUBLISHING, CHAM, PAGE(S) 29 - 41, XP047617739, ISSN: 0302-9743 ISBN: 978-3-030-41298-2 [retrieved on 2021-10-22] * abstract; figures 1-6 * * page 30, paragraph first - page 39, last paragraph * ----- | 1-12 | INV. G06N3/04 G06N3/08 |
| A | BACK SEUNGHYEOK ET AL: "Robust Skin Disease Classification by Distilling Deep Neural Network Ensemble for the Mobile Diagnosis of Herpes Zoster", IEEE ACCESS, IEEE, USA, vol. 9, 25 January 2021 (2021-01-25), pages 20156-20169, XP011834980, DOI: 10.1109/ACCESS.2021.3054403 [retrieved on 2021-02-03] * abstract; figures 5,6 * * page 20162, last paragraph * ----- | 1-12 | |

TECHNICAL FIELDS
SEARCHED (IPC)

G06N

The present search report has been drawn up for all claims

| Place of search | Date of completion of the search | Examiner |
|---|---|---|
| The Hague | 2 September 2022 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 108229501
- CN 110705440
- US 20200074305 A
- US 20080240514 A

### Non-patent literature cited in the description

- **ROBERT GEIRHOS ; PATRICIA RUBISCH ; CLAUDIO MICHAELIS ; MATTHIAS BETHGE ; FELIX A. WICHMANN ; WIELAND BRENDEL.** *Imagenet-trained cnns are biased towards texture; increasing shape bias improves accuracy and robustness,* 2019
- **YINGWEI LI ; QIHANG YU ; MINGXING TAN ; JIERU MEI ; PENG TANG ; WEI SHEN ; ALAN YUILLE ; CIHANG XIE.** Shapetexture debiased neural network training. *arXiv preprint arXiv:2010.05981,* 2020
- **KAIYANG ZHOU ; YONGXIN YANG ; YU QIAO ; TAO XIANG.** Domain generalization with mixstyle. *arXiv preprint arXiv,* 2021, vol. 2104, 02008
- **XI CHEN ; YAN DUAN ; REIN HOUTHOOFT ; JOHN SCHULMAN ; ILYA SUTSKEVER ; PIETER ABBEEL.** Infogan: Interpretable representation learning by information maximizing generative adversarial nets. *Proceedings of the 30th International Conference on Neural Information Processing Systems,* 2016, 2180-2188
- **BYUNGJU KIM ; HYUNWOO KIM ; KYUNGSU KIM ; SUNGJIN KIM ; JUNMO KIM.** Learning not to learn: Training deep neural networks with biased data. *Proceedings of the IEEE/CVF Conference on Computer Vision and Pattern Recognition,* 2019, 9012-9020
- Best sources forward: domain generalization through source-specific nets. **MASSIMILIANO MANCINI ; SAMUEL ROTA BULO ; BARBARA CAPUTO ; ELISA RICCI.** 2018 25th IEEE international conference on image processing (ICIP). IEEE, 2018, 353-1357
- **SAACHI JAIN ; DIMITRIS TSIPRAS ; ALEKSANDER MADRY.** Combining diverse feature priors. *arXiv preprint arXiv,* 2021, vol. 2110, 08220